# EUROPEAN PATENT SPECIFICATION

(11) **EP 2 437 908 B1**
(45) Date of publication and mention of the grant of the patent: **15.08.2018**
(21) Application number: 10783647.0
(22) Date of filing: 01.06.2010
(51) Int. Cl.: B23D 63/16

(54) **DEVICE AND METHOD FOR AUTOMATIC GRINDING OF A SAW CHAIN**
VORRICHTUNG UND VERFAHREN ZUR AUTOMATISCHEN SCHLEIFUNG EINER SÄGENKETTE
DISPOSITIF ET PROCEDE DE MEULAGE AUTOMATIQUE D'UNE CHAÎNE DE SCIE

(30) Priority: 02.06.2009 SE 0900748
(43) Date of publication of application: 11.04.2012
(73) Proprietor: Markusson, Pär Mikael, 762 31 Rimbo (SE)
(72) Inventor: Markusson, Pär Mikael, 762 31 Rimbo (SE)
(74) Representative: Ehrner & Delmar Patentbyrå AB
(86) International application number: PCT/SE2010/000147
(87) International publication number: WO 2010/140948

(56) References cited:
- WO-A1-2005/053889
- WO-A1-2007/050006
- WO-A1-2007/050006
- DE-A1- 3 011 786
- FR-A1- 2 347 141
- SE-C2- 527 002
- SE-C2- 527 002
- US-A- 3 952 615
- US-A- 4 416 169
- US-A- 5 117 713

## Description

### Technical field of the invention

This invention relates to a device for automatic grinding of a saw chain, which device comprises chain guides, means for feeding the saw chain forward along the chain guides, means for fixing the saw chain relative to the chain guides, and means for positioning a rotatable grinding disc which forms part of the device and which is switchable between two positions for grinding of right links and left links. The invention relates also to a method for automatic grinding of saw chains.

### State of the art

In the grinding of saw chains it is important that both the cutting tooth and the depth gauge are ground, which normally involves a number of grinding operations.

From US 4 416 169 A is previously known an automatic saw chain grinder according to the preamble of claim 1. US 4 416 169 A discloses two embodiments. The first embodiment is adapted to grind a cutter tooth of a saw chain while the second embodiment is adapted to grind a depth gauge and a gullet of a saw chain.

A grinding disc known from WO 2007/050006 is for simultaneous grinding of a cutting tooth which forms part of a saw chain and the relating depth gauge, which grinding disc has a first cutting surface in the region of its periphery and a second cutting surface which may have the shape of a circular cylinder or a truncated cone. As described in WO 2007/050006, the grinding disc has to be made in a number of configurations to suit different saw chains available on the market. The grinding disc is preferably faced with boron nitride, which makes it expensive.

### Objects and features of the invention

A primary object of the present invention is to propose a device of the kind defined above in which a grinding disc of standard configuration is used to grind both cutting teeth and depth gauges.

Another object of the present invention is that grinding of cutting teeth and depth gauges should take place in separate grinding processes.

A further object of the present invention is that grinding a cutting tooth and an associated depth gauge should take place in a number of consecutive grinding stages.

Yet another object of the present invention is to effect grinding of the portion of the saw chain which extends between the cutting tooth and the depth gauge.

At least the primary object of the present invention is achieved by a device and a method having the features indicated in the independent claims set out below. Preferred embodiments of the inventions are defined in the dependent claims.

### Brief description of the drawings

An embodiment of the invention is described below with reference to the attached drawings, in which:
- Fig. 1: depicts a side view of a device according to the present invention for automatic grinding of saw chains;
- Fig. 2: depicts an end view of the device in Fig. 1;
- Fig. 3: depicts a plan view of the device in Fig. 1;
- Fig. 4: depicts a perspective view of the device in Fig. 1, in which a grinding disc forming part of the device assumes an inactive position;
- Fig. 5: depicts a perspective view of the device in Fig. 1, in which a grinding disc forming part of the device assumes an active position;
- Fig. 6A: depicts a section along A-A in Fig. 1 or 4, illustrating in plan view a control mechanism of the device according to the present invention;
- Fig. 6B: depicts the position which the grinding disc of the device assumes when the control mechanism is in the position depicted;
- Fig. 7A: depicts a section along A-A in Fig. 1 or 4, illustrating in plan view a new position for the control mechanism of the device according to the present invention;
- Fig. 7B: depicts the position which the grinding disc of the device assumes when the control mechanism is in the position depicted;
- Fig. 8A: depicts a section along A-A in Fig. 1 or 4, illustrating in plan view a new position for the control mechanism of the device according to the present invention;
- Fig. 8B: depicts the position which the grinding disc of the device assumes when the control mechanism is in the position depicted;
- Fig. 9A: depicts a section along A-A in Fig. 1 or 4, illustrating in plan view a new position for the control mechanism of the device according to the present invention;
- Fig. 9B: depicts the position which the grinding disc of the device assumes when the control mechanism is in the position depicted;
- Fig. 10A: depicts a section along A-A in Fig. 1 or 4, illustrating in plan view a new position for the control mechanism of the device according to the present invention; and
- Fig. 10B: depicts the position which the grinding disc of the device assumes when the control mechanism is in the position depicted.

### Detailed description of a preferred embodiment of the invention

A saw chain comprises cutting teeth which are normally angled respectively to left and right alternately.

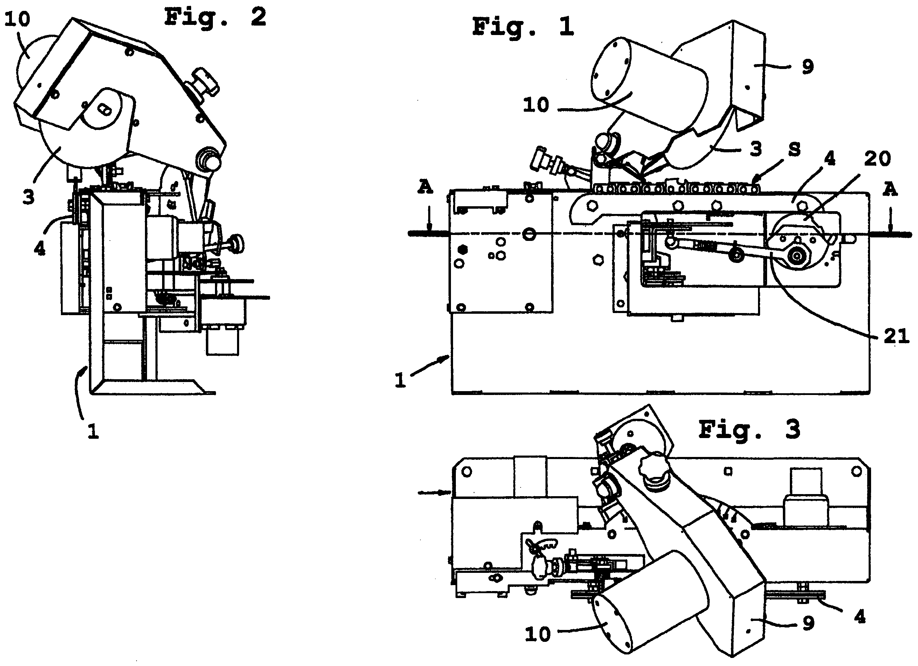

The device in Figs. 1-3 for grinding of saw chains comprises generally a frame 1 which has means for supporting rotatably a grinding disc 3 which performs grinding operations on the saw chain S, only part of which is depicted in Figs. 1-3. The saw chain S is supported by chain guides 4.

The means for supporting the grinding disc 3 comprises a support arm 5 and a cover 9 which is attached pivotably to the support arm 5 via a first articulation 7 and which itself supports a first electric motor 10 which has the grinding disc 3 mounted on its shaft. The support arm 5 is connected to a first support element 11 which has an extent in the height direction of the device. The support arm 5 has a shoulder 6. The first support element 11 has an upper first bracket 12, a lower second bracket 13 and an intermediate third bracket 14.

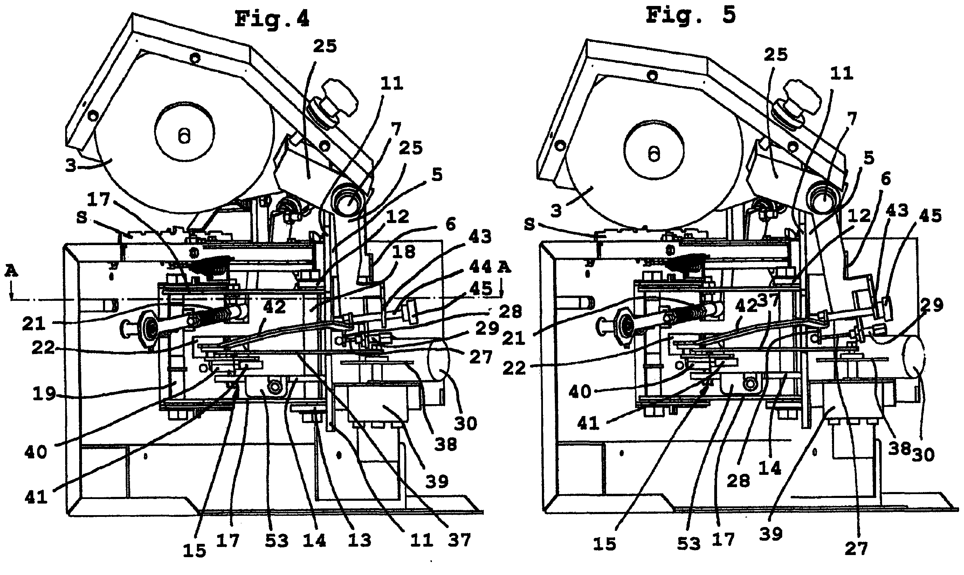

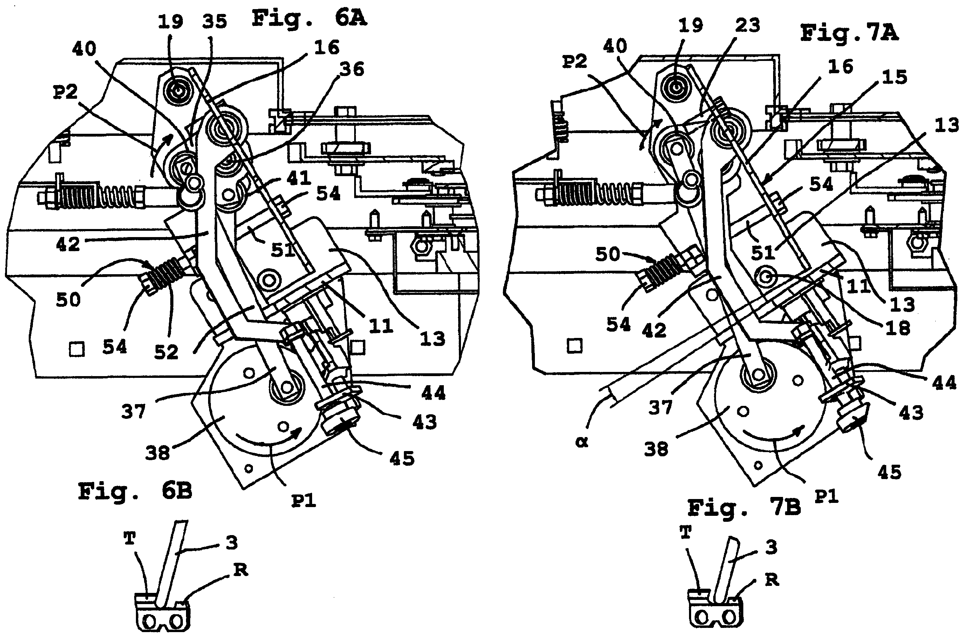

The device according to the present invention has also a generally U-shaped second support element 15, the bottom 16 of the U is in the plane of the paper in Fig. 4 and the limbs 17 of the U are perpendicular to the paper. In the region of its one end, the first support element 11 is connected pivotably via the brackets 12, 13 to the second support element 15 by means of a first spindle 18 which is accommodated pivotably in the limbs 17 of the U-shaped second support element 15 and which has its ends connected to the brackets 12, 13. In the region of its other end, the U-shaped second support element 15 is connected pivotably to the frame 1, which connection is effected by means of a second spindle 19. Changing over between grinding of right and left links respectively involves the second support element 15 being pivoted relative to the frame via the second spindle 19. This is effected by means of a second electric motor 20 (not depicted in Fig. 4) connected via a strut 21 to the second support element 15. The result is that the first support element 11 and the grinding disc 3 attached to it move in conjunction and assume a new grinding position. Pivoting the grinding disc 3 relative to the frame 1 is in principle known in the prior art, whereas according to the invention there is provided a constructional configuration with an articulatable fastening between the first support element 11 and the second support element 15. An aperture 22, see Figs. 4 and 5, the function of which will be explained below, is provided in the bottom 16 of the second support element 15. A stop screw 23, see Fig. 7A, the function of which will be explained below, is also fitted in the bottom 16 of the second support element 15.

A lifting arm 25 generally comprising two portions at an angle to one another is disposed close to the support arm 5 of the device according to the present invention. The lifting arm 25 is fastened articulatedly to the support arm 5 via the first articulation 7. When the lifting arm 25 moves relative to the first articulation 7, the cover 9 and the grinding disc 3 move in conjunction with it.

The lifting arm 25 can be acted upon in various ways. To effect a marked change of position of the lifting arm 25, the device according to the present invention is provided with a wire 27 which has its end anchored in a first abutment 28 attached to the first support element 11. One end of the wire sleeve 29 is anchored in the lifting arm 25 and the other end of the wire sleeve 29 is anchored in the frame 1. The wire 27 can be acted upon by a third electric motor 30 to cause it to move relative to the wire sleeve 29, resulting in the lifting arm 25 rotating about the first articulation 7. The rotation of the lifting arm 25 about the first articulation 7 results in the cover 9 with the grinding disc 3 being transferred between the raised position, see Fig. 4, in which no grinding takes place, and a lowered position, see Fig. 5, in which grinding takes place. This movement of the cover 9 and the grinding disc 3 between inactive and active positions is known in the prior art.

A generally triangular guide element 35 fastened pivotably via a second articulation 36 to the intermediate bracket 14 is disposed in the region of the free end of the intermediate bracket 14. A first link 37 extends between the triangular guide element 35 and a rotating disc 38 connected to the shaft of a fourth electric motor 39 which is attached to the first support element 11 on the opposite side from the intermediate bracket 14. The fourth electric motor 39 can cause the disc 38 to rotate in the direction of the arrow P1. According to the embodiment depicted, the first link 37 is articulatedly fastened to the triangular guide element 35 on its upper side and has attached to its lower side a first contact element in the form of a first ball bearing 40 depicted in continuous lines in Fig. 6A despite being masked. According to the embodiment depicted, the articulated fastening of the first link 37 coincides with the centre of rotation of the first ball bearing 40. According to the embodiment depicted, the first link 37 and the first ball bearing 40 are disposed in the region of a first corner of the triangular guide element 35.

A second contact element in the form of a second ball bearing 41 is attached rotatably to the underside of the triangular guide element 35 in the region of a second corner of the triangular guide element 35. As most clearly illustrated in Figs. 6A-8A, the triangular guide element 35 is partly accommodated in the aperture 22, see Figs. 4 and 5, during certain parts of the grinding operation which the device according to the present invention performs.

A second link 42 has its one end fastened articulatably to a third corner of the triangular guide element 35 and has its other end fastened adjustably to a second abutment 43 on the lifting arm 25. The adjustable fastening comprises a threaded rod 44 and a nutlike wheel 45 which can be moved along the threaded rod 44.

The device according to the present invention has a spring arrangement 50 which urges the free end of the intermediate bracket 14 towards the bottom 16 of the second support element 15. This is not visible in the drawings. The spring arrangement 50 comprises a threaded rod 51 with a compression spring 52 at its one end, a third abutment 53 integrated with the intermediate bracket 14, and a penetration for the threaded rod 51 in the bottom 16 of the second support element 15. Nuts 54 are fitted on the ends of the threaded rod 51. The compression spring 52 is clamped between the one nut 54 and the third abutment 53.

A grinding operation performed by the device described above is described below. Grinding operation in this context means the grinding stages effected between two feed-forward movements of the saw chain S. Feeding the saw chain S forward may be effected as described in the applicant's older Swedish patent 0401028-6 (527 002). Figs. 6A and 6B depict the introductory stage of a grinding operation, which stage comprises grinding a cutting tooth T which forms part of the saw chain S. For this grinding stage to take place, the grinding disc 3 has to be transferred from an inactive raised position to an active lowered position. This is done by using the third electric motor 30 to activate the wire 27, which can be caused to move relative to the wire sleeve 29. The result is a transfer of the grinding disc 3 from the position in Fig. 4 to the position in Fig. 5. The grinding disc 3 assuming the position in Fig. 5 results in the lifting arm 25 coming to abut against the shoulder 6. During the transfer from the position in Fig. 4 to the position in Fig. 5, the grinding disc 3 is caused to rotate by means of the first electric motor 10. When the grinding disc 3 has assumed the position in Fig. 5, it remains in this position for a certain predetermined time during which grinding of the cutting tooth T takes place. When the predetermined time has passed, the fourth electric motor 39 comes into action, causing the disc 38 to rotate in the direction of the arrow P1. The triangular guide element 35 will thus be transferred from the position in Fig. 6A to the position in Fig. 7A, i.e. the guide element 35 will move in the direction of the arrow P2 about the second articulation 36. At the same time, the first ball bearing 40 comes to abut against the stop screw 23 and the continuing rotation of the triangular guide element 35 about the articulation 36 results in rotation/pivoting of the first support element 11 relative to the second support element 15 via the first spindle 18. This rotation/pivoting of the first support element 11 is represented by the angle α in Fig. 7A. As the grinding disc 3 is firmly connected, via the cover 9 and the support arm 5, to the first support element 11, the rotation/pivoting of the first support element 11 will be converted to a movement of the grinding disc 3 away from the position for grinding the cutting tooth T, see Fig. 7B, towards the depth gauge R, see Fig. 7B. The grinding disc 3 will thus effect grinding of the depression between the cutting tooth T and the depth gauge R. This is an advantage in that repeated grinding of the cutting tooth T may result in the formation of a "ridge" in an intermediate portion of the depression. While the grinding disc 3 is executing the movement illustrated in Figs. 6B and 7B, the lifting arm 25 abuts against the shoulder 6, i.e. there is a clearance between the second abutment 43 and the wheel 45, see Figs. 6A and 7A.

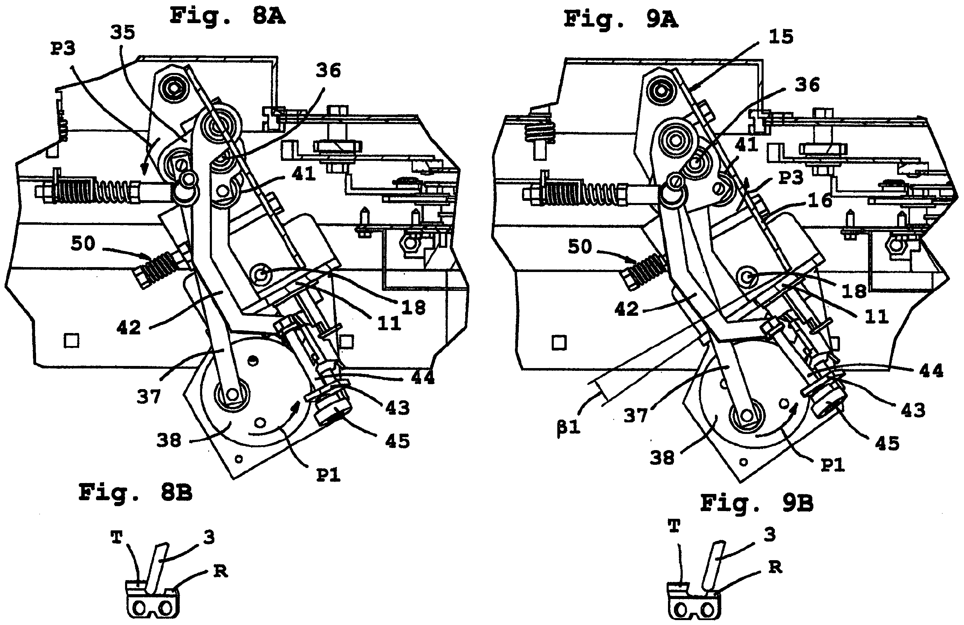

Upon continued rotation of the disc 38 in the direction of the arrow P1, the triangular guide element 35 will move in the direction of the arrow P3, see Fig. 8A, about the second articulation 36, i.e. away from the stop screw 23. The spring arrangement 50 urges the free end of the intermediate bracket 14 to abut against the bottom 16 of the second support element 15, and the first support element 11 assumes relative to the second support element 15 a position similar to that in Fig. 6A. This means that the cutting tooth T undergoes a further grinding by the grinding disc 3.

Upon continued rotation of the disc 38 in the direction of the arrow P1, the fastening of the second link 42 to the triangular guide element 35 will move in the direction of the arrow P3, about the second articulation 36, from the position in Fig. 8A to the position in Fig. 9A. The result is that immediately after the position in Fig. 8A, the wheel 45 comes to abut against the second abutment 43, and the continuing movement of the fastening of the second link 42 to the triangular guide element 35 about the articulation 36 causes raising of the grinding disc 3 as a result of the wheel 45 coming to abut against the second abutment 43 on the lifting arm 25. In the position in Fig. 9A, a rise corresponding to the height of the depth gauge R relative to the bottom of the depression between it and the cutting tooth T will have taken place.

During the movement of the triangular guide element 35 in the direction of the arrow P3 which took place by transfer from the position in Fig. 8A to the position in Fig. 9A, the second ball bearing 41 will have come to abut against the bottom 16 of the second support element 15, resulting in rotation/pivoting of the first support element 11 relative to the second support element 15. This rotation/pivoting is represented by the angle β1 in Fig. 9A. This rotation/pivoting will also have entailed the grinding disc 3 being moved from the position in Fig. 8B to the position in Fig. 9B.

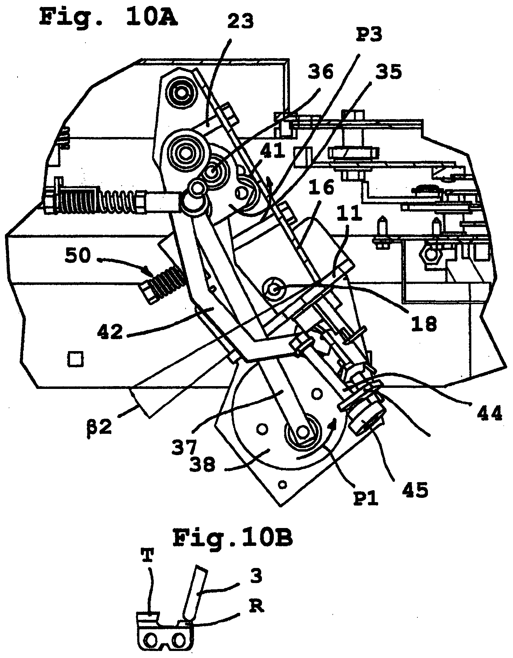

Upon continued rotation of the disc 38 in the direction of the arrow P1, the first link 37 will impart to the triangular guide element 35 a continuing movement in the direction of the arrow P3 about the articulation 36. Continuing contact will thus be established between the wheel 45 and the second abutment 43 of the lifting arm 25. This means that the grinding disc 3 will remain at substantially the same level during the transfer between the position in Fig. 9A and the position in Fig. 10A. Since the fastening of the second link 42 to the triangular guide element 35 moves along a circular arc about the articulation 36, a certain height variation, albeit in principle negligible, will occur. The continuing movement of the triangular guide element 35 in the direction of the arrow P3 also causes further rotation/pivoting of the first support element 11 relative to the second support element 15, as may be seen from the fact that β2 > β1. The angle difference between β2 and β1 corresponds to the distance by which the grinding disc 3 will have moved from the position in Fig. 9B to the position in Fig. 10B as a result of the aforesaid further rotation/pivoting having been imparted to the support arm 5 which supports the grinding disc 3. During the movement of the grinding disc 3 from the position in Fig. 9B to the position in Fig. 10B, the grinding disc 3 will have performed grinding of the depth gauge R.

Upon continued rotation of the disc 38 in the direction of the arrow P1, the continuing movement of the triangular guide element 35 in the direction of the arrow P3 about the articulation 36 will cease once the fastening of the first link 37 to the disc 38 has passed the point furthest away from the triangular guide element 35. Further continued rotation of the disc 38 causes the triangular guide element 35 to move in the direction of the arrow P2, see Fig. 6A, resulting in cessation of contact between the second ball bearing 41 and the bottom 16 of the second support element 15. This means that contact between the second abutment 43 and the wheel 45 ceases and the spring arrangement 50 urges the free end of the intermediate bracket 14 to abut against the bottom 16 of the second support element 15. The grinding disc 3 then drops down to the level where the lifting arm 25 abuts against the shoulder 6, i.e. the position in Fig. 6A is reverted to and a third grinding of the cutting tooth T takes place during the grinding operation described, which is thereby completed.

In this context it should be noted that the rotatable fastening of the ball bearings 40, 41 to the guide element 35 results in no sliding in the contact region between the ball bearings 40, 41 and the stop screw 23 and the bottom 16 of the second support element 15.

A new grinding operation is commenced by the grinding disc 3 being raised by the wire 27 and the saw chain S being fed forward. A further cutting tooth with opposite oblique positioning (right-left) relative to the cutting tooth which has just been ground is normally fed forward. The first support element 11 has then to be pivoted about the second spindle 19 so that the grinding disc assumes a correct position for grinding the cutting tooth fed forward.

### Conceivable modifications of the invention

In the embodiment described above there is grinding of the depression between the cutting tooth T and the depth gauge R. Within the scope of the present invention, however, it is conceivable that grinding the depression is omitted, i.e. grinding the cutting tooth T is followed by grinding the depth gauge R. To achieve this, the device described above is modified in such a way that the stop screw 23 is removed.

The embodiment described above of the device according to the present invention performs a grinding operation comprising the following stages:
1) grinding a cutting tooth (T),
2) grinding a depression between the cutting tooth (T) and the depth gauge (R),
3) grinding the cutting tooth (T),
4) grinding the depth gauge (R),
5) grinding the cutting tooth (T).
The cutting tooth (T) being ground several times is an advantage in that such a procedure eliminates any burrs which arise during the grinding. In this context it should however be noted that the method according to the present invention is in no way limited to the grinding operation defined above. Thus, as indicated above, grinding the depression of the saw chain (S) may be eliminated, nor need a grinding operation involve grinding the cutting tooth (T) three times. Thus it is possible within the scope of the present invention to conceive of a method whereby a grinding operation comprises only grinding a cutting tooth T and grinding a depth gauge R, both of these two stages being effected by the same grinding disc 3.

## Claims

1. A device for automatic grinding of a saw chain (S), which device comprises chain guides (4), means for feeding the saw chain (S) forward along the chain guides (4), means for fixing the saw chain (S) relative to the chain guides (4), and means (5, 11) for supporting a rotatable grinding disc (3) which forms part of the device and which is switchable between two positions for grinding of right links and left links of the saw chain (S), **characterised in that** the device comprises a guide element (35), a bracket (12-14) connected to the support means (5, 11) and rotatably supporting the guide element (35), means (37, 38) for imparting to the guide element (35) a reciprocating movement, contact means (40, 41) attached to the guide element (35), stop means (23) or shoulder surfaces (16) attached to or formed on the support means (5, 11) and intended to cooperate with the contact means (40, 41), thereby generating movement of the grinding disc (3) in the longitudinal direction of the saw chain (S), and means (27-30; 25, 35, 38, 39, 42, 43, 44, 45) for raising the grinding disc (3) in order both to allow feeding forward of the saw chain (S) and to place the grinding disc (3) in the grinding position so that the grinding disc (3) can automatically grind a cutting tooth (T) and thereafter a depth gauge (R) of a cutting link of a saw chain (S).

2. A device according to claim 1, **characterised in that** the contact means (40, 41) take the form of ball bearings and that the ball bearings (40, 41) are attached rotatably to the guide element (35).

3. A device according to claim 1 or 2,
**characterised in that** the means for imparting to the guide element (35) a reciprocating movement comprise a rotating disc (38), a power source (39) to rotate the disc (38), and a first link (37) which is connected articulatably both to the disc (38) and to the guide element (35).

4. A device according to any one of the above claims,
**characterised in that** the means for raising the grinding disc (3) comprise a wire (27), a wire sleeve (29) and a power source (30) to effect movement of the wire (27) relative to the wire sleeve (29).

5. A device according to any one of the above claims,
**characterised in that** the means for raising the grinding disc (3) comprise a second link (42) connected articulatably to the guide element (35) and that the second link (42) is connected to a lifting arm (25) for the grinding disc (3).

6. A device according to any one of the above claims,
**characterised in that** the guide element (35) is generally triangular and that the contact means (40, 41) are disposed in the region of two separate corners of the guide element (35).

7. A device according to any one of the above claims,
**characterised in that** the intermediate bracket (14) of the first support element (11) is articulatably connected to a second support element (15) via a spindle (18).

8. A method for automatic grinding of a saw chain (S) by means of a device according to any of claims 1-7, in which feeding the saw chain (S) forward takes place when a grinding operation is completed, which method comprises grinding of cutting teeth (T) of the saw chain (S) by means of a grinding disc (3) which for the purpose of grinding a cutting tooth (T) is transferred from a raised position to a lowered position, **c haracterised** in that grinding of depth gauges (R) of the saw chain (S) is effected by means of the grinding disc (3) and that to this end the grinding disc (3) is subjected to a height adjustment and a movement in the longitudinal direction of the saw chain (S).

9. A method according to claim 7, **characterised in that** the grinding operation comprises successive stages of:
1) grinding a cutting tooth (T),
2) grinding a depth gauge (R).

10. A method according to claim 9, **characterised in that** the grinding operation further comprises a subsequent stage consisting in grinding the cutting tooth (T) a second time by means of the grinding disc (3).

11. A method according to claim 9, **characterised in that** the grinding operation comprises a further stage consisting in grinding, by means of the grinding disc (3), a depression of the saw chain (S) which is situated between the cutting tooth (T) and the depth gauge (R), and that this grinding takes place between the first grinding of the cutting tooth (T) and the grinding of the depth gauge (R).

## Patentansprüche

1. Vorrichtung zur automatischen Schleifung einer Sägekette (S), wobei die Vorrichtung Kettenführungen (4), Mittel zum Vorschieben der Sägekette (S) entlang der Kettenführungen (4), Mittel zum Fixieren der Sägekette (S) relativ zu den Kettenführungen (4) und Mittel (5, 11) zum Halten einer drehbaren Schleifscheibe (3) umfasst, die Teil der Vorrichtung bildet und zwischen zwei Positionen umschaltbar ist, um rechte Glieder und linke Glieder der Sägekette (S) zu schleifen, **dadurch gekennzeichnet, dass** die Vorrichtung ein Führungselement (35), eine Klammer (12-14), die mit dem Halterungsmittel (5, 11) verbunden ist und das Führungselement (35) drehbar hält, Mittel (37, 38), die das Führungselement (35) in eine Hin- und Herbewegung versetzen, Kontaktmittel (40, 41), die am Führungselement (35) befestigt sind, Stoppmittel (23) oder Schulterflächen (16), die am Halterungsmittel (5, 11) befestigt oder gebildet sind und mit dem Kontaktmittel (40, 41) zusammenwirken sollen, wodurch eine Bewegung der Schleifscheibe (3) in Längsrichtung der Sägekette (S) erzeugt wird, und Mittel (27-30; 25, 35, 38, 39, 42, 43, 44, 45) zum Anheben der Schleifscheibe (3) umfasst, um sowohl einen Vorschub der Sägekette (S) wie auch eine Platzierung der Schleifscheibe (3) in der Schleifposition zu ermöglichen, sodass die Schleifscheibe (3) automatisch ein Schneidwerkzeug (T) und danach eine Tiefenlehre (R) eines Schneidglieds einer Sägekette (S) schleifen kann.

2. Vorrichtung nach Anspruch 1, **dadurch gekennzeichnet, dass** die Kontaktmittel (40, 41) die Form von Kugellagern annehmen und dass die Kugellager (40, 41) drehbar am Führungselement (35) befestigt sind.

3. Vorrichtung nach Anspruch 1 oder 2, **dadurch gekennzeichnet, dass** die Mittel, die das Führungselement (35) in eine Hin- und Herbewegung versetzen, eine drehende Scheibe (38), eine Stromquelle (39) zum Drehen der Scheibe (38), und ein erstes Verbindungsglied (37) umfassen, das sowohl mit der Scheibe (38) wie auch dem Führungselement (35) gelenkig verbunden ist.

4. Vorrichtung nach einem der vorangehenden Ansprüche, **dadurch gekennzeichnet, dass** das Mittel zum Anheben der Schleifscheibe (3) einen Draht (27), eine Drahthülse (29) und eine Stromquelle (30) umfasst, um eine Bewegung des Drahts (27) relativ zur Drahthülse (29) zu bewirken.

5. Vorrichtung nach einem der vorangehenden Ansprüche, **dadurch gekennzeichnet, dass** das Mittel zum Anheben der Schleifscheibe (3) ein zweites Verbindungsglied (42) umfasst, das gelenkig mit dem Führungselement (35) verbunden ist, und dass das zweite Verbindungsglied (42) mit einem Hebearm (25) für die Schleifscheibe (3) verbunden ist.

6. Vorrichtung nach einem der vorangehenden Ansprüche, **dadurch gekennzeichnet, dass** das Führungselement (35) im Allgemeinen dreieckig ist und dass die Kontaktmittel (40, 41) im Bereich zweier getrennter Ecken des Führungselements (35) angeordnet sind.

7. Vorrichtung nach einem der vorangehenden Ansprüche, **dadurch gekennzeichnet, dass** die Zwischenklammer (14) des ersten Halterungselements (11) gelenkig mit einem zweiten Halterungselement (15) über eine Spindel (18) verbunden ist.

8. Verfahren zur automatischen Schleifung einer Sägekette (S) mittels einer Vorrichtung nach einem der Ansprüche 1 bis 7, wobei ein Vorschub der Sägekette (S) erfolgt, wenn ein Schleifvorgang beendet ist, wobei das Verfahren ein Schleifen von Schneidzähnen (T) der Sägekette (S) mit Hilfe einer Schleifscheibe (3) umfasst, die zum Zwecke des Schleifens eines Schneidezahns (T) aus einer angehobenen Position in eine abgesenkte Position überführt wird, **dadurch gekennzeichnet, dass** das Schleifen von Tiefenlehren (R) der Sägekette (S) mit Hilfe der Schleifscheibe (3) erfolgt und dass zu diesem Zweck die Schleifscheibe (3) einer Höheneinstellung und einer Bewegung in der Längsrichtung der Sägekette (S) unterzogen wird.

9. Verfahren nach Anspruch 7, **dadurch gekennzeichnet, dass** der Schleifvorgang aufeinanderfolgende Stufen umfasst:
1) Schleifen eines Schneidezahns (T),
2) Schleifen einer Tiefenlehre (R).

10. Verfahren nach Anspruch 9, **dadurch gekennzeichnet, dass** der Schleifvorgang ferner eine anschließende Stufe umfasst, die aus einem Schleifen des Schneidezahns (T) ein zweites Mal mit Hilfe der Schleifscheibe (3) besteht.

11. Verfahren nach Anspruch 9, **dadurch gekennzeichnet, dass** der Schleifvorgang eine weitere Stufe umfasst, die aus einem Schleifen einer Vertiefung der Sägekette (S), die zwischen dem Schneidezahn (T) und der Tiefenlehre (R) liegt, mit Hilfe der Schleifscheibe (3) besteht, und dass dieses Schleifen zwischen dem ersten Schleifen des Schneidezahns (T) und dem Schleifen der Tiefenlehre (R) stattfindet.

## Revendications

1. Dispositif de meulage automatique d'une chaîne de scie (S), ledit dispositif comprenant des guides de chaîne (4), des moyens pour faire courir la chaîne de scie (S) vers l'avant le long des guides de chaîne (4), des moyens pour fixer la chaîne de scie (S) par rapport aux guides de chaîne (4), et des moyens (5, 11) pour supporter un disque de meulage rotatif (3) qui fait partie du dispositif et qui est commutable entre deux positions pour meuler les liaisons de droite et les liaisons de gauche de la chaîne de scie (S), **caractérisé en ce que** le dispositif comprend un élément de guidage (35), une console (12-14) connectée aux moyens de support (5, 11) et qui supporte de façon rotative l'élément de guidage (35), des moyens (37, 38) pour imprimer à l'élément de guidage (35) un mouvement alternatif, des moyens de contact (40, 41) attachés à l'élément de guidage (35), des moyens d'arrêt (23) ou des surfaces d'épaulement (16) attaché(e)s aux ou formé(e)s sur les moyens de support (5, 11) et destinée(e)s à coopérer avec les moyens de contact (40, 41), générant de ce fait un déplacement du disque de meulage (3) dans la direction longitudinale de la chaîne de scie (S), et des moyens (27-30; 25, 35, 38, 39, 42, 43, 44, 45) pour élever le disque de meulage (3) dans le but à la fois de faire avancer la chaîne de scie (S) et de placer le disque de meulage (3) dans la position de meulage de telle sorte que le disque de meulage (3) puisse meuler automatiquement une dent de coupe (T) et ensuite une cote de profondeur (R) d'une liaison de coupe d'une chaîne de scie (S).

2. Dispositif selon la revendication 1, **caractérisé en ce que** les moyens de contact (40, 41) se présentent sous la forme de roulements à billes et lesdits roulements à billes (40, 41) sont attachés de façon rotative à l'élément de guidage (35).

3. Dispositif selon la revendication 1 ou 2, **caractérisé en ce que** les moyens pour imprimer à l'élément de guidage (35) un mouvement alternatif comprennent un disque rotatif (38), une source de puissance (39) pour faire tourner le disque (38), et une première liaison (37) qui est connectée de façon articulée à la fois au disque (38) et à l'élément de guidage (35).

4. Dispositif selon l'une quelconque des revendications précédentes, **caractérisé en ce que** les moyens pour élever le disque de meulage (3) comprennent un fil (27), une gaine de fil (29) et une source de puissance (30) pour réaliser le déplacement du fil (27) par rapport à la gaine de fil (29).

5. Dispositif selon l'une quelconque des revendications précédentes, **caractérisé en ce que** les moyens pour élever le disque de meulage (3) comprennent une seconde liaison (42) connectée de façon articulée à l'élément de guidage (35), et **en ce que** la seconde liaison (42) est connectée à un bras de levage (25) pour le disque de meulage (3).

6. Dispositif selon l'une quelconque des revendications précédentes, **caractérisé en ce que** l'élément de guidage (35) est essentiellement triangulaire, et **en ce que** les moyens de contact (40, 41) sont disposés dans la région de deux coins séparés de l'élément de guidage (35).

7. Dispositif selon l'une quelconque des revendications précédentes, **caractérisé en ce que** la console intermédiaire (14) du premier élément de support (11) est connectée de façon articulée à un second élément de support (15) par l'intermédiaire d'une broche (18).

8. Procédé de meulage automatique d'une chaîne de scie (S) au moyen d'un dispositif selon l'une quelconque des revendications 1 à 7, dans lequel l'avancement de la chaîne de scie (S) vers l'avant est réalisé lorsqu'une opération de meulage est terminée, ledit procédé comprenant le meulage des dents de coupe (T) de la chaîne de scie (S) au moyen d'un disque de meulage (3) qui, pour le besoin du meulage d'une dent de coupe (T), est transféré d'une position élevée à une position abaissée, **caractérisé en ce que** le meulage des cotes de profondeur (R) de la chaîne de scie (S) est effectué au moyen du disque de meulage (3), et **en ce qu'**à cette fin le disque de meulage (3) est soumis à un réglage de la hauteur et à un déplacement dans la direction longitudinale de la chaîne de scie (S).

9. Procédé selon la revendication 7, **caractérisé en ce que** l'opération de meulage comprend les étapes successives suivantes:
1) meuler une dent de coupe (T), et
2) meuler une cote de profondeur (R).

10. Procédé selon la revendication 9, **caractérisé en ce que** l'opération de meulage comprend en outre une étape suivante qui consiste à meuler la dent de coupe (T) une seconde fois au moyen du disque de meulage (3).

11. Procédé selon la revendication 9, **caractérisé en ce que** l'opération de meulage comprend une étape supplémentaire qui consiste à meuler, au moyen du disque de meulage (3), une dépression de la chaîne de scie (S) qui est située entre la dent de coupe (T) et la cote de profondeur (R), et **en ce que** ce meulage est effectué entre le premier meulage de la dent de coupe (T) et le meulage de la cote de profondeur (R).
